# EUROPEAN PATENT APPLICATION

(11) **EP 4 742 577 A1**
(43) Date of publication of application: **13.05.2026**
(21) Application number: 23944044.9
(22) Date of filing: 05.07.2023
(51) Int. Cl.: H04L 5/00, H04W 52/02

(54) **LOW-LATENCY SERVICE TRANSMISSION METHOD, ACCESS POINT DEVICE, STATION DEVICE, AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/105964
(87) International publication number: WO 2025/007313

(57) **Abstract**

Embodiments of the present application relate to a low-latency service transmission method, an access point device, a station device, and a communication system. The low-latency service transmission method comprises: determining a first radio frame, wherein the first radio frame indicates time information, and the time information identifies additional time information required by a receiving end of the first radio frame to decrypt the first radio frame; and sending the first radio frame. In this way, the receiving end receiving the first radio frame can reserve a time period corresponding to the additional time information to decrypt the first radio frame; thus, the transmission safety of the first radio frame is improved, and the receiving end cannot respond to function information of the first radio frame itself.

## Description

### TECHNICAL FIELD

This disclosure relates to the field of communication technology, and more particularly to a low-latency service transmission method, an access point, a station, and a communication system.

### BACKGROUND

Peer-to-peer (P2P) communication transmits data without the need for an access point, avoiding delays caused by network congestion and further improving transmission efficiency. To further reduce the transmission latency of low-latency service data during data transmission, the transmission process needs to be optimized.

### SUMMARY

Embodiments of this disclosure provide a low-latency service transmission method, an access point, a station, and a communication system, to provide a mechanism for improving the transmission latency of low-latency services.

According to a first aspect of embodiments of this disclosure, a low-latency service transmission method is provided, the method including:
determining a first radio frame, wherein the first radio frame indicates first identification information, the first identification information identifies duration information for P2P communication of at least two stations; and
transmitting the first radio frame.

According to a second aspect of embodiments of the present disclosure, a low-latency service transmission method is provided, the method including:
receiving a first radio frame, wherein the first radio frame indicates first identification information, the first identification information identifies duration information for P2P communication of at least two stations.

According to a third aspect of embodiments of the present disclosure, an access point is provided, the access point includes:
a radio frame determination module, configured to determine a first radio frame, wherein the first radio frame indicates first identification information, the first identification information identifies duration information for P2P communication of at least two stations; and
a radio frame transmission module, configured to transmit the first radio frame.

According to a fourth aspect of embodiments of the present disclosure, a station is provided, the station includes:
a radio frame receiving module, configured to receive a first radio frame, wherein the first radio frame indicates first identification information, the first identification information identifies duration information for P2P communication of at least two reference stations, the station is included in the at least two reference stations.

According to a fifth aspect of embodiments of this disclosure, an access point is provided, including:
one or more processors;
wherein, the access point is configured to perform the low-latency service transmission method described in the optional embodiments of the first aspect.

According to a sixth aspect of embodiments of this disclosure, a station is provided, including:
one or more processors;
wherein, the station is configured to perform the low-latency service transmission method described in the optional embodiments of the second aspect.

According to a seventh aspect of embodiments of this disclosure, a communication system is provided, including an access point and a station, wherein the access point is configured to implement the low-latency service transmission method provided in the first aspect, and the station is configured to implement the low-latency service transmission method described in the optional embodiments of the second aspect.

According to an eighth aspect of embodiments of this disclosure, a storage medium is provided, storing instructions that, when executed on a communication device, cause the communication device to perform the low-latency service transmission method described in the optional embodiments of the first or second aspect.

Additional aspects and advantages of embodiments of this disclosure will be set forth in part in the following description, and will be obvious from the description, or may be learned by practice of the disclosure. It should be understood that the above general description and the following detailed description are exemplary and explanatory only, and are not intended to limit this disclosure.

### BRIEF DESCRIPTION OF THE DRAWINGS

To more clearly illustrate the technical solutions in the embodiments of the present disclosure, the following introduces the accompanying drawings required for describing the embodiments. The following drawings are merely some embodiments of the present disclosure and do not impose specific limitations on the protection scope of the present disclosure.
FIG. 1 is an example schematic diagram of the architecture of a communication system provided according to an embodiment of this disclosure.
FIG. 2 is one of the example interaction schematic diagrams of a communication method provided according to an embodiment of this disclosure.
FIG. 3A is one of the example flowchart schematic diagrams of a communication method provided according to an embodiment of this disclosure.
FIG. 3B is another one of the example flowchart schematic diagrams of a communication method provided according to an embodiment of this disclosure.
FIG. 3C is another one of the example flowchart schematic diagrams of a communication method provided according to an embodiment of this disclosure.
FIG. 3D is another one of the example flowchart schematic diagrams of a communication method provided according to an embodiment of this disclosure.
FIG. 4A is another one of the example flowchart schematic diagrams of a communication method provided according to an embodiment of this disclosure.
FIG. 4B is another one of the example flowchart schematic diagrams of a communication method provided according to an embodiment of this disclosure.
FIG. 4C is another one of the example flowchart schematic diagrams of a communication method provided according to an embodiment of this disclosure.
FIG. 4D is another one of the example flowchart schematic diagrams of a communication method provided according to an embodiment of this disclosure.
FIG. 5A is another one of the example interaction schematic diagrams of a communication method provided according to an embodiment of this disclosure.
FIG. 5B is another one of the example interaction schematic diagrams of a communication method provided according to an embodiment of this disclosure.
FIG. 5C is another one of the example interaction schematic diagrams of a communication method provided according to an embodiment of this disclosure.
FIG. 5D is another one of the example interaction schematic diagrams of a communication method provided according to an embodiment of this disclosure.
FIG. 6 is one of the example structural diagrams of the communication method provided according to an embodiment of the present disclosure.
FIG. 7 is another one of the example structural diagrams of the communication method provided according to an embodiment of the present disclosure.
FIG. 8 is another one of the example structural diagrams of the communication method provided according to an embodiment of the present disclosure.
FIG. 9 is another one of the example structural diagrams of the communication method provided according to an embodiment of the present disclosure.

### DETAILED DESCRIPTION

The embodiments of this disclosure provide a low-latency service transmission method, an access point, a station, and a communication system.

In a first aspect, the embodiments of this disclosure provide a low-latency service transmission method, including:
determining a first radio frame, wherein the first radio frame indicates first identification information, the first identification information identifies duration information for peer-to-peer (P2P) communication of at least two stations; and
transmitting the first radio frame.

In the above embodiment, the first radio frame indicates the first identification information, the first identification information identifies duration information for P2P communication of at least two stations, and broadcasts the first radio frame, which enables the station receiving the first radio frame to perform P2P communication according to the duration information identified by the first identification information, and allows the P2P communication service to meet latency requirements, improves spectrum utilization, and is suitable for UHR (Ultra-High Reliability) requirements.

In conjunction with some embodiments of the first aspect, in some embodiments of the first aspect, the above duration information includes at least two of communication duration, start time, and end time of P2P communication for the stations.

In the above embodiments, the time period of P2P communication for the stations can be determined based on at least two of the communication duration, start time, and end time of P2P communication for the stations. This lays the groundwork for subsequently isolating the time periods corresponding to different communication processes, avoiding cross-interference between transmission services in different communication processes.

In conjunction with some embodiments of the first aspect, in some embodiments, the first radio frame carries a Restricted Target Wake Time R-TWT information element;
the R-TWT information element includes an R-TWT Traffic Info field;
the R-TWT Traffic Info field includes a Traffic Info Control subfield;
the Traffic Info Control subfield includes P2P communication information.

In the above embodiments, first radio frame carries an R-TWT information element, the R-TWT information element includes an R-TWT Traffic Info field, the R-TWT Traffic Info field includes a Traffic Info Control subfield, the Traffic Info Control subfield includes P2P communication information. Therefore, the station receiving the first radio frame can accurately parse the P2P communication information in the first radio frame based on the location information of the P2P communication information in the first radio frame.

In conjunction with some embodiments of the first aspect, in some embodiments, the P2P communication information includes:
traffic identifier (TID) information;
or TID information and link bitmap information;
the link bitmap information is set to a first parameter value, indicating that P2P communication is performed over a link corresponding to the TID information.

In the above embodiments, by setting TID information or setting TID information and link bitmap information in the P2P communication information, the station receiving the first radio frame can obtain the link capable of performing the P2P communication, and the type of service transmitted during P2P communication, based on the P2P communication information.

In conjunction with some embodiments of the first aspect, in some embodiments of the first aspect, the R-TWT information element further includes aligned information,
the aligned information is set to a second parameter value, indicating that P2P communication is performed over an established P2P link.

In the above embodiments, by setting aligned information in the R-TWT information element, the station receiving the first radio frame can perform P2P communication over any established P2P link, based on the aligned information.

In conjunction with some embodiments of the first aspect, in some embodiments of the first aspect, time for communication of the access point and the station does not overlap with time corresponding to the duration information.

In the above embodiments, by separating the communication time between the access point and the station from the time corresponding to the duration information, it can avoid interference between communication services of the access point and the station and communication services over the P2P link, thus avoiding impacts on service communication efficiency and improving spectrum utilization.

In conjunction with some embodiments of the first aspect, in some embodiments, the above method may further include:
receiving a second radio frame sent by a first station, wherein the second radio frame indicates second identification information, the second identification information identifies request information for requesting a second station to perform P2P communication with the first station;
forwarding the second radio frame to the second station;
receiving a third radio frame sent by the second station, wherein the third radio frame indicates third identification information, the third identification information identifies response information to the request information;
forwarding the third radio frame to the first station.

In the above embodiments, the access point forwards a second radio frame (e.g., a P2P communication request frame) and a third radio frame (e.g., a P2P communication response frame) between the two STAs (the first STA and the second STA), it can be determined whether the requesting party (e.g., the first STA) initiating the P2P communication request (i.e., the request information requesting the second STA to perform P2P communication with the first STA) in STAs can perform P2P communication with the responding party (e.g., the second STA) of the P2P communication request. This allows the requesting party of the P2P communication request to perform P2P communication with the responding party of the P2P communication request after receiving a response information indicating permission to perform P2P communication.

In conjunction with some embodiments of the first aspect, in some embodiments, the above method may further include:
determining a fourth radio frame, wherein the fourth radio frame includes first transmit power information for P2P communication of a third station and a fourth station; a P2P link is established between the third station and the fourth station;
sending the fourth radio frame to a fifth station, to indicate the fifth station to perform P2P communication with a sixth station through second transmit power information; wherein a P2P link is established between the fifth station and the sixth station; the second transmit power information is different from the first transmit power.

In the above embodiments, by sending the first transmit power information between STAs currently performing P2P communication to the fifth station, P2P communication between STAs (i.e., the fifth station and the sixth station) that have established a P2P link can be effectively triggered, allowing the fifth station and the sixth station to use a transmit power different from the first transmit power information to perform P2P communication, thereby improving spectrum utilization.

In conjunction with some embodiments of the first aspect, in some embodiments of the first aspect, a seventh station sends a Request to Send RTS frame to an eighth station; and performs P2P communication with the eighth station after receiving a Clear to Send CTS frame sent from the eighth station; wherein a P2P link is established between the seventh station and the eighth station.

In the above embodiments, any station (e.g., the seventh station) that has established a P2P link among the STAs can send an RTS frame to the peer station (e.g., the eighth station) within the STAs, and initiate P2P communication between the STAs after receiving a CTS frame sent from the peer station, which may effectively trigger P2P communication among the STAs that have established the P2P link.

In conjunction with some embodiments of the first aspect, in some embodiments of the first aspect, the first radio frame includes at least one of a beacon frame, a probe response frame, or an unsolicited probe response frame.

In an second aspect, embodiments of this disclosure propose a low-latency service transmission method, including:
receiving a first radio frame, wherein the first radio frame includes time information, the time information identifies additional time information required for the receiving end of the first radio frame to decrypt the first radio frame.

In the above embodiments, the first radio frame indicates the first identification information, the first identification information identifies duration information for P2P communication of at least two stations, and broadcasts the first radio frame, which enables the station receiving the first radio frame to perform P2P communication according to the duration information identified by the first identification information, and allows the P2P communication service to meet latency requirements, improves spectrum utilization, and is suitable for UHR (Ultra-High Reliability) requirements.

In conjunction with some embodiments of the second aspect, in some embodiments of the first aspect, the above duration information includes at least two of communication duration, start time, and end time of P2P communication for the stations.

In conjunction with some embodiments of the second aspect, in some embodiments, the first radio frame carries a Restricted Target Wake Time R-TWT information element;
the R-TWT information element includes an R-TWT Traffic Info field;
the R-TWT Traffic Info field includes a Traffic Info Control subfield;
the Traffic Info Control subfield includes P2P communication information.

In conjunction with some embodiments of the second aspect, in some embodiments, the P2P communication information includes:
TID information;
or TID information and link bitmap information;
the link bitmap information is set to a first parameter value, indicating that P2P communication is performed over a link corresponding to the TID information.

In conjunction with some embodiments of the first aspect, in some embodiments of the first aspect, the R-TWT information element further includes aligned information,
the aligned information is set to a second parameter value, indicating that P2P communication is performed over an established P2P link.

In conjunction with some embodiments of the second aspect, in some embodiments of the first aspect, time for communication of the access point and the station does not overlap with time corresponding to the duration information.

In conjunction with some embodiments of the second aspect, in some embodiments of the second aspect: determining a second radio frame, wherein the second radio frame indicates second identification information, the second identification information identifies request information for requesting a second station to perform P2P communication with the first station;
sending the second radio frame;
determining whether to perform P2P communication with the second station based on third identification information after receiving a third radio frame, wherein the third radio frame indicates the third identification information, the third identification information identifies response information to the request information;
wherein the third radio frame is generated by the second station after receiving the second radio frame forwarded by the access point.

In conjunction with some embodiments of the second aspect, in some embodiments of the second aspect, the method further includes:
receiving a fourth radio frame, wherein the fourth radio frame includes first transmit power information for P2P communication of a third station and a fourth station; a P2P link is established between the third station and the fourth station; the fourth radio frame indicates to perform P2P communication with a ninth station through second transmit power information; the second transmit power information is different from the first transmit power;
performing P2P communication with the ninth station through the second transmit power information according to the fourth radio frame; wherein a P2P link is established between the first station and the ninth station.

In the above embodiments, by receiving first transmit power information between STAs (i.e., the fifth and sixth stations) that have established P2P links associated with the access point, and using a transmit power different from the first transmit power information for P2P communication, spectrum utilization is improved.

In conjunction with some embodiments of the second aspect, in some embodiments of the second aspect, the above method may further include:
sending a RTS frame to a tenth station;
performing P2P communication with the tenth station after receiving a CTS frame sent by the tenth station; wherein a P2P link is established between the first station and the tenth station.

In the above embodiments, any station (e.g., the first station) that has established a P2P link among the STAs can send an RTS frame to the peer station (e.g., the tenth station) within the STAs, and initiate P2P communication between the STAs after receiving a CTS frame sent from the peer station, which may effectively trigger P2P communication among the STAs that have established the P2P link.

In conjunction with some embodiments of the second aspect, in some embodiments of the first aspect, the first radio frame includes at least one of a beacon frame, a probe response frame, or an unsolicited probe response frame.

In a third aspect, embodiments of this disclosure provide an access point, including:
a radio frame determination module, configured to determine a first radio frame, wherein the first radio frame indicates first identification information, the first identification information identifies duration information for P2P communication of at least two stations; and
a radio frame transmission module, configured to transmit the first radio frame.

In a fourth aspect, embodiments of this disclosure provide a station, including:
a radio frame receiving module, configured to receive a first radio frame, wherein the first radio frame indicates first identification information, the first identification information identifies duration information for P2P communication of at least two reference stations, the station is included in the at least two reference stations.

In a fifth aspect, embodiments of this disclosure provide an access point, including:
one or more processors;
wherein, the access point is configured to perform the low-latency service transmission method described in the optional embodiments of the first aspect.

In a sixth aspect, embodiments of this disclosure provide a station, including:
one or more processors;
wherein, the station is configured to perform the low-latency service transmission method described in the optional embodiments of the second aspect.

In a seventh aspect, embodiments of this disclosure provide a communication system, including an access point and a station, wherein the access point is configured to implement the low-latency service transmission method provided in the first aspect, and the station is configured to implement the low-latency service transmission method described in the optional embodiments of the second aspect.

In an eighth aspect, embodiments of this disclosure provide a storage medium, storing instructions that, when executed on a communication device, cause the communication device to perform the low-latency service transmission method described in the optional embodiments of the first or second aspect.

In a ninth aspect, embodiments of this disclosure provide a program product that, when executed by a communication device, causes the communication device to perform the low-latency service transmission method described in the optional embodiments of the first or second aspect.

In a tenth aspect, embodiments of this disclosure provide a computer program that, when executed on a computer, causes the computer to perform the low-latency service transmission method described in the optional embodiments of the first or second aspect.

In an eleventh aspect, embodiments of this disclosure provide a chip or chip system. The chip or chip system includes processing circuitry configured to perform the low-latency service transmission method described in the optional embodiments of the first or second aspect.

It is understood that the access point, the station, the communication system, the storage medium, the program product, the computer program, the chip, or the chip system described above are all used to execute the method proposed in the embodiments of this disclosure. Therefore, the beneficial effects achieved can be referred to the beneficial effects in the corresponding methods, and will not be repeated here.

The embodiments of this disclosure propose a low-latency service transmission method, an access point, and a station, to further improve the low-latency service transmission mechanism and enhance the transmission security of data frames.

The method and apparatus are based on the same application concept, since the principles by which the method and apparatus solve the problem are similar, the implementation of the apparatus and method can be referred to each other, and repeated details will not be repeated.

In some embodiments, terms such as the low-latency service transmission and information processing method, the communication method, etc., can be substituted for each other; terms such as the access point equipment and information processing apparatus, the communication apparatus, etc., can be substituted for each other; terms such as the station and information processing apparatus, the communication apparatus, etc., can be substituted for each other; and terms such as the information processing system, the communication system, etc., can be substituted for each other.

The embodiments of the present disclosure are not exhaustive, but merely illustrative of some embodiments, and are not intended to limit the protection scope of this disclosure. Without conflict, each step in an embodiment can be implemented as a standalone embodiment, and the steps can be arbitrarily combined. For example, a solution after removing some steps in an embodiment can also be implemented as a standalone embodiment, and the order of the steps in an embodiment can be arbitrarily interchanged. Furthermore, the optional implementations in an embodiment can be arbitrarily combined; moreover, the embodiments can be arbitrarily combined, for example, some or all steps of different embodiments can be arbitrarily combined, and an embodiment can be arbitrarily combined with the optional implementations of other embodiments.

In each embodiment of this disclosure, unless otherwise specified or there is a logical conflict, the terminology and/or descriptions between the embodiments are consistent and can be mutually referenced. Technical features in different embodiments can be combined to form new embodiments according to their inherent logical relationships.

The terminology used in the embodiments of this disclosure is only for the purpose of describing specific embodiments and is not intended to limit this disclosure.

In the embodiments of this disclosure, unless otherwise stated, elements expressed in the singular form, such as "a", "an", "the", "aforementioned", "said", "foregoing" and "this" or the like can mean "one and only one" or "one or more", "at least one", etc. For example, when using articles such as "a", "an" and "the" in the English translation, the noun following the article can be understood as either a singular or a plural expression.

In embodiments of this disclosure, "multiple" refers to two or more.

In some embodiments, terms such as "at least one of", "one or more", "a plurality of" and "multiple" can be used interchangeably.

In some embodiments, "at least one of A and B", "A and/or B", "A in one situation, B in another situation", "in response to one situation A, in response to another situation B", etc., may include the following technical solutions depending on the situation: in some embodiments, A (A executed independently of B); in some embodiments, B (B executed independently of A); in some embodiments, selective execution from A and B (A and B are selectively executed); in some embodiments, A and B (both A and B are executed). The same applies when there are more branches such as A, B, C, etc.

In some embodiments, "A or B" etc., may include the following technical solutions depending on the situation: in some embodiments, A (A executed independently of B); in some embodiments, B (B executed independently of A); in some embodiments, selective execution from A and B (A and B are selectively executed). The same applies when there are more branches such as A, B, C, etc.

The prefixes such as "first", "second" or the like in the embodiments of this disclosure are merely for distinguishing different descriptive objects and do not constitute restrictions on the position, order, priority, number, or content of the descriptive objects. For the description of the descriptive objects, please refer to the description in the claims or the context of the embodiments, and the use of prefixes should not constitute unnecessary restrictions. For example, if the descriptive object is a "field", then the ordinal numbers preceding "field" in "first field" and "second field" do not restrict the position or order of the "fields", "first" and "second" do not restrict whether the "fields" they modify are in the same message, nor do they restrict the order of "first field" and "second field." As another example, if the descriptive object is a "level", then the ordinal numbers preceding "level" in "first level" and "second level" do not restrict the priority between "levels". For another example, the number of objects described is not limited by ordinal numbers, which can be one or more. For example, for "first apparatus", the number of "apparatus" can be one or more. Furthermore, objects modified by different prefixes can be the same or different. For instance, if the described object is "apparatus", then "first apparatus" and "second apparatus" can be the same apparatus or different apparatuses, and their types can be the same or different. Similarly, if the described object is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "in response to...", "in response to determining...", "in a case that...", "at the time of...", "when...", "if...", "assuming that...", or the like can be used interchangeably.

In some embodiments, terms such as "greater than", "greater than or equal to", "not less than", "more than", "more than or equal to", "not smaller than", "higher", "higher than or equal to", "not lower than", "above" or the like can be used interchangeably, and terms such as "smaller than", "smaller than or equal to", "not greater than", "less than", "less than or equal to", "no more than", "lower than", "lower than or equal to", "not higher than", "below" or the like can be used interchangeably.

In some embodiments, the acquisition of data, information or the like may comply with the laws and regulations of the country where the acquisition takes place.

In some embodiments, data, information, etc., may be acquired after obtaining the user consent.

Furthermore, each element, each row, or each column in the tables of embodiments of this disclosure can be implemented as a standalone embodiment, and the combination of any element, any row, or any column can also be implemented as a standalone embodiment.

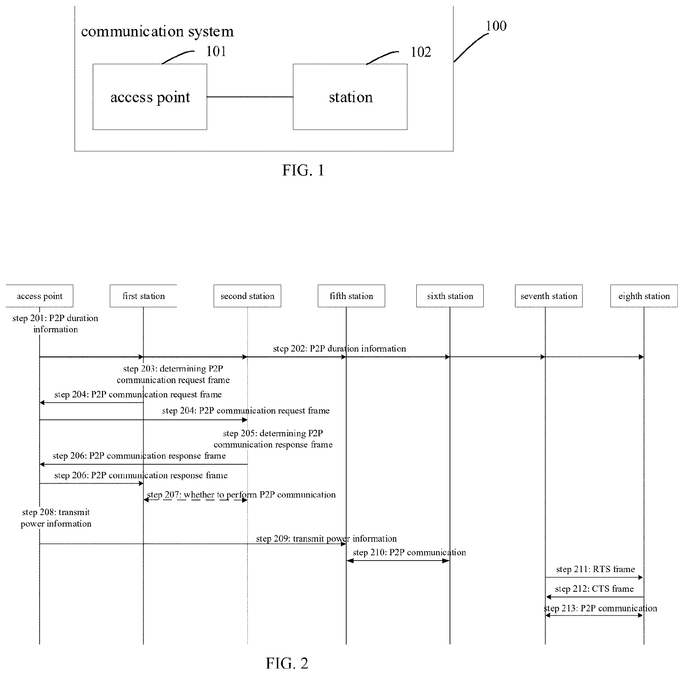

FIG. 1 is a schematic diagram of the architecture of a communication system according to an embodiment of this disclosure.

As shown in FIG. 1, the communication system 100 includes an access point 101 and at least one station 102.

In some embodiments, the access point (AP) 101, for example, is a device with wireless-to-wired bridging capabilities, which extends the services provided by the wired network to the wireless network. Optionally, the access point can also be a multi-connection access point, i.e., an access point that supports multi-connection communication capabilities.

In some embodiments, station (STA) 102, for example, is an electronic device with wireless network access capabilities, providing frame delivery services to enable information transmission. Optionally, the station can also be a multi-connection station, i.e., a station that supports multi-connection communication capabilities.

In some embodiments, the access point 101 and the station 102 establish an initial association, and different stations 102 may establish P2P links (e.g., TDLS (Tunneled Direct Link Setup) links). The embodiments of this disclosure do not limit the number of stations 102 that have established a P2P link.

Optionally, in embodiments of this disclosure, the determining end of the first radio frame can be the access point 101, and the receiving end of the first radio frame can be the station 102.

It is understood that the communication system described in embodiments of this disclosure is for the purpose of more clearly illustrating the technical solutions of embodiments of this disclosure, and does not constitute a limitation on the technical solutions proposed in embodiments of this disclosure. Those skilled in the art will understand that with the evolution of system architecture and the emergence of new business scenarios, the technical solutions proposed in embodiments of this disclosure are also applicable to similar technical issues.

FIG. 2 is an interactive schematic diagram of a low-latency service transmission method according to an embodiment of this disclosure. As shown in FIG. 2, the embodiments of this disclosure relate to a low-latency service transmission method, which includes following steps.

Step 201, the access point determines a first radio frame, the first radio frame indicates first identification information, the first identification information identifies duration information for P2P communication of at least two stations.

Assuming that the AP has established an initial association with STA1 and STA2, and a TDLS link has been established between STA1 and STA2, TXOP (transmission opportunity) sharing mechanism can be used during P2P communication. The AP shares a TXOP with STA1 for P2P transmission and sends an MU-RTS TXS frame (Multi-User Request-to-Send Transmission Opportunity Sharing frame) to STA1, indicating STA1 to perform P2P communication with STA2 over the TDLS link.

However, with the continuous development of WiFi technology, to meet UHR (Ultra-High Reliability) requirements, multiple STAs associated with the AP may need to perform P2P communication. Furthermore, during P2P communication, low-latency service data may need to be transmitted. To avoid interference between the service data transmitted between the AP and STA and the service data transmitted in P2P communication, the low-latency service transmission method provided in embodiments of this disclosure can be used for P2P communication.

In some embodiments, the first radio frame can be at least one of the beacon frame, the probe response frame, or the unsolicited probe response frame.

In some embodiments, the at least two stations include a first station, a second station, a third station, ..., a tenth station. The access point establishes an initial association with each of the at least two stations.

In some embodiments, the first radio frame may include the communication duration between any two stations performing P2P communication.

In some embodiments, the duration information includes at least two of the following: communication duration, start time, and end time of the P2P communication between the stations.

As an example, when the duration information includes the communication duration and the start time, the end time can be determined by adding the communication duration to the start time. When the duration information includes the communication duration and the end time, the start time can be determined by subtracting the communication duration from the end time. Then, based on the start time and the end time, the time period for P2P communication by the station can be determined.

In the above embodiment, the time period for P2P communication by the station can be determined based on at least two of the communication duration, start time, and end time of P2P communication for the stations, which lays the groundwork for subsequently isolating the time periods corresponding to different communication processes, avoiding cross-interference between transmission services in different communication processes.

In some embodiments, the first radio frame carries a Restricted Target Wake Time R-TWT information element;
the R-TWT information element includes an R-TWT Traffic Info field;
the R-TWT Traffic Info field includes a Traffic Info Control subfield;
the Traffic Info Control subfield includes P2P communication information.

The beacon frame or (unsolicited) probe response frame may include R-TWT information elements, which may include the R-TWT Traffic Info field. The R-TWT Traffic Info field may include subfields such as Traffic Info Control, Restricted TWT DL TID Bitmap (R-TWT downlink TID bitmap), and Restricted TWT UL TID Bitmap (R-TWT uplink TID bitmap). Refer to Table 1 to determine the individual subfields within the R-TWT Traffic Info field.

**Table 1**

| Content | Traffic Info Control | Restricted TWT DL TID Bitmap | Restricted TWT UL TID Bitmap |
|---|---|---|---|
| Octets | 1 | 1 | 1 |

As shown in Table 1, the R-TWT information element may include the Traffic Info Control subfield, the Restricted TWT DL TID Bitmap subfield, and the Restricted TWT UL TID Bitmap subfield. The octet corresponding to Traffic Info Control subfield is 1, the octet corresponding to the Restricted TWT DL TID Bitmap subfield is 1, and the octet corresponding to the Restricted TWT UL TID Bitmap subfield is 1.

The Traffic Info Control subfield may include information such as DL TID Bitmap Valid (downlink TID bitmap parameter value), UL TID Bitmap Valid (uplink TID bitmap parameter value), and Reserved. Refer to Table 2 to determine the information in the R-TWT Traffic Info Control field.

**Table 2**

| Content | DL TID Bitmap Valid | UL TID Bitmap Valid | Reserved |
|---|---|---|---|
| Bits | 1 | 1 | 6 |
| order of Bits | B0 | B1 | B2 to B7 |

As shown in Table 2, the R-TWT Traffic Info field may include DL TID Bitmap Valid, UL TID Bitmap Valid, and Reserved. DL TID Bitmap Valid includes 1 bit, and the corresponding bit order is B0; UL TID Bitmap Valid includes 1 bit, and the corresponding bit order is B1; Reserved includes 6 bits, and the corresponding bit order is B2 to B7.

In some embodiments, one bit in Reserved can be used to identify P2P communication information.

In the above embodiments, the first radio frame carries R-TWT information elements. The R-TWT information elements include an R-TWT Traffic Info field, which includes a Traffic Info Control subfield. The Traffic Info Control subfield includes P2P communication information, thereby enabling the station receiving the first radio frame to accurately parse the P2P communication information in the first radio frame based on the location information of the P2P communication information in the first radio frame.

In some embodiments, the P2P communication information includes:
TID information;
or TID information and link bitmap information;
wherein, the link bitmap information is set to a first parameter value, indicating that P2P communication is performed over a link corresponding to the TID information.

The TID (traffic identifier) information can be TID-to-link mapping information negotiated between any two stations (i.e., both STAs) during the establishment of a P2P link. This TID-to-link mapping information can indicate the type of service transmitted in the P2P link established by the STAs, for example, it can characterize the low-latency service.

In some embodiments, the first radio frame may include P2P communication duration information corresponding to each TID. For example, the AP may broadcast P2P communication duration information corresponding to any TID from TID= 0 to 7.

In actual processing, after the STAs negotiate and obtain the TID-to-link mapping information, the TID-to-link mapping information can be reported to the access point associated with each STA in the both STAs.

The access point can determine the P2P communication information based on the TID information reported by both STAs.

In some embodiments, the link bitmap information can be 8 bits, 16 bits, 32 bits, etc., and this disclosure does not limit this. Each bit in the link bitmap information can indicate whether P2P communication can be performed over a P2P link. For example, for each bit in the link bitmap information, when the bit is set to a first parameter value (e.g., 1), it indicates that P2P communication is performed over the link corresponding to the bit, and the service corresponding to the TID information is transmitted over the link. When this bit is set to a third parameter value (e.g., 0), it indicates that P2P communication cannot be performed over the link corresponding to the bit.

In the above embodiments, by setting TID information or setting TID information and link bitmap information in the P2P communication information, the station receiving the first radio frame can obtain the link capable of performing the P2P communication, and the type of service transmitted during P2P communication, based on the P2P communication information.

In some embodiments, the R-TWT information element may further include aligned information,

the aligned information is set to a second parameter value, indicating that P2P communication is performed over an established P2P link.

In some embodiments, the aligned information can be a field in the R-TWT information element.

As an example, when the aligned information is set to the second parameter value, such as 1, it can identify that P2P communication can be performed over any established P2P link.

In the above embodiments, by setting aligned information in the R-TWT information element, the station receiving the first radio frame can perform P2P communication over any established P2P link according to the aligned information.

In some embodiments, time for communication of the access point and the station does not overlap with time corresponding to the duration information.

The communication time of the access point and the station can be the communication cycle between the access point and the station, for example, the R-TWT SP (Restricted Target Wake Time Service Period).

In some embodiments, first time for communication of the access point and the station not overlapping with second time corresponding to the duration information can include either no overlap between the first time and the second time, or partial overlap between the first time and the second time. For example, if the first time is t1 to t2 and the second time is t3 to t4, then there is no overlap between the first time and the second time, i.e., t3 - t2 > 0; or there is partial overlap between the first time and the second time, i.e., t1 < t3 < t2 < t4, and the overlap time between the first time and the second time is t2 - t3.

In the above embodiments, by separating the communication time between the access point and the station from the time corresponding to the duration information, it can avoid interference between communication services of the access point and the station and communication services over the P2P link, thus avoiding impacts on service communication efficiency and improving spectrum utilization.

Step 202, the access point sends a first radio frame to the station that has established an initial association with the access point.

In the above embodiment, the first radio frame indicates the first identification information, the first identification information identifies duration information for P2P communication of at least two stations, and broadcasts the first radio frame, which enables the station receiving the first radio frame to perform P2P communication according to the duration information identified by the first identification information, and allows the P2P communication service to meet latency requirements, improves spectrum utilization, and is suitable for UHR requirements.

Step 203, the first station determines a second radio frame, the second radio frame indicates second identification information, the second identification information identifies request information for requesting a second station to perform P2P communication with the first station.

In some embodiments, the second radio frame may include a P2P communication request frame.

In some embodiments, if the first station determines that the second time and the communication time between the first station and the access point do not overlap, it may send a P2P communication request frame to the access point, requesting P2P communication with the second station.

Step 204, the access point receives the second radio frame and forwards the second radio frame to the second station.

Step 205, the second station determines a third radio frame, the third radio frame indicates the third identification information, the third identification information identifies response information to the request information.

In some embodiments, the third radio frame may include a P2P communication response frame.

The third identification information may indicate that the second station allows P2P communication with the first station. For example, if the communication time between the first station and the access point do not overlap with the second time, the second station may allow P2P communication with the first station.

The third identification information may also indicate that the second station does not allow P2P communication with the first station. For example, if the communication time between the first station and the access point overlap with the second time, the second station may not allow P2P communication with the first station.

Step 206, the access point receives the third radio frame and forwards the third radio frame to the first station.

Step 207, the first station determines whether to perform P2P communication with the second station based on the third identification information.

In the above embodiments, the access point forwards the P2P communication request frame and the P2P communication response frame between the two STAs (the first STA and the second STA), it can determine whether the requesting party initiating the P2P communication request in the STAs can perform P2P communication with the responding party of the P2P communication request, enabling the requesting party of the P2P communication request to perform P2P communication with the responding party of the P2P communication request after receiving a response information indicating permission to perform P2P communication.

Step 208, the access point determines a fourth radio frame, the fourth radio frame includes first transmit power (tx power) information for P2P communication of a third station and a fourth station; a P2P link is established between the third station and the fourth station.

In some embodiments, the fourth radio frame may include a MU-RTS TXS frame.

In some embodiments, the MU-RTS TXS Trigger frame may include transmit power information (hereinafter referred to as "first transmit power information") between STAs engaged in P2P communication (e.g., a third station and a fourth station that have established a P2P link), multiple station information, and transmit power information (hereinafter referred to as "third transmit power information") of the access point communicating with its associated station.

The station information may include an AID (association identifier), which is an identifier assigned by the access point to the station which has established an association with the access point.

Step 209, the access point sends a fourth radio frame to the fifth station, to indicate the fifth station to perform P2P communication with the sixth station through a second transmit power; a P2P link is established between the fifth station and the sixth station; the second transmit power is different from the first transmit power and the third transmit power.

Step 210, the fifth station and the sixth station perform P2P communication.

In the above embodiments, by sending the first transmit power information between STAs currently engaged in P2P communication as well as the second transmit power information regarding the communication between the access point and its associated station, P2P communication between STAs (i.e., the fifth and sixth stations) with established P2P links can be effectively triggered. This allows the fifth and sixth stations to use a second transmit power different from the first and third transmit power information for P2P communication, improving spectrum utilization.

Step 211, the seventh station sends a Request to Transmit RTS frame to the eighth station; wherein, the seventh and eighth stations have established a P2P link.

Step 212, the eighth station sends a Clear to Send CTS frame to the seventh station, triggering P2P communication between the seventh and eighth stations.

Step 213, the seventh and eighth stations perform P2P communication.

In the above embodiments, any station (e.g., the seventh station) that has established a P2P link among the STAs can send an RTS frame to the peer station (e.g., the eighth station) within the STAs, and initiate P2P communication between the STAs after receiving a CTS frame sent from the peer station, which may effectively trigger P2P communication among the STAs that have established the P2P link.

Thus, the low-latency service transmission method described above avoids interference between service data transmitted between the AP and STA and service data transmitted in P2P communication, which ensures that P2P communication services meet latency requirements, improves spectrum utilization, and is suitable for UHR requirements.

The low-latency service transmission method involved in the embodiments of this disclosure may include at least one of steps 201 to 212. For example, steps 201 and 202 can be implemented as a standalone embodiment, step 202 can be implemented as a standalone embodiment, steps 201 to 207 can be implemented as a standalone embodiment, steps 201, 202, 208 to 210 can be implemented as a standalone embodiment, steps 201, 202, 211 to 213 can be implemented as a standalone embodiment, steps 201 to 210 can be implemented as a standalone embodiment, steps 201 to 207, 211 to 213 can be implemented as a standalone embodiment, and steps 201 to 213 can be implemented as a standalone embodiment, but are not limited thereto.

In some embodiments, steps 203 to 207, steps 208 to 210, and steps 211 to 213 can be performed in an interchangeable order or simultaneously.

In some embodiments, any combination of steps 203 to 207, 208 to 210, and 211 to 213 is optional, and one or more of these combination steps can be omitted or substituted in different embodiments.

In some embodiments, other optional implementations described before or after the description corresponding to FIG. 2 can be referred to.

Thus, the above-described low-latency service transmission method can avoid mutual interference between service data transmitted between AP and STA and service data transmitted in P2P communication, enabling P2P communication services to meet latency requirements, improving spectrum utilization, and being suitable for UHR requirements. The embodiments of this disclosure provide a low-latency service data transmission mechanism.

In some embodiments, terms such as "frame" and "radio frame" can be used interchangeably.

In some embodiments, "acquire", "obtain", "get", "receive", "transmit", "bidirectional transmission" and "send and/or receive" can be used interchangeably, and can be interpreted as receiving from other entities, obtaining from protocols, obtaining from higher layers, obtaining through self-processing, or autonomous implementation, etc.

In some embodiments, terms such as "send", "transmit", "report", "send", "transmit", "bidirectional transmission" and "send and/or receive" can be used interchangeably.

In some embodiments, terms such as "certain", "preseted", "preset", "set", "indicated", "given", "arbitrary" and "first" are interchangeable. "Certain A", "preseted A", "preset A", "set A", "indicated A", "given A", "arbitrary A" and "first A" can be interpreted as A pre-defined in a protocol, or A obtained through setting, configuration, or indication, or as the certain A, given A, arbitrary A, or first A, but not limited to thereto.

In some embodiments, determination or judgment can be performed using a value (0 or 1) represented by 1 bit, or by a true/false value (Boolean) represented by true or false, or by a numerical comparison (e.g., a comparison with a predetermined value), but are not limited thereto.

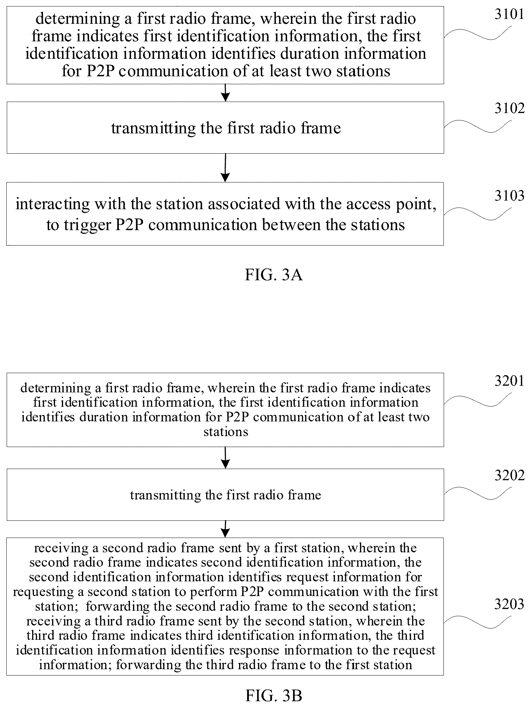

FIG. 3A is a flowchart illustrating a low-latency service transmission method according to an embodiment of this disclosure. As shown in FIG. 3A, embodiments of this disclosure relate to a low-latency service transmission method. Optionally, the above method can be applied to the access point.

As shown in FIG. 3A, the above method includes following steps.

Step 3101, a first radio frame is determined, the first radio frame indicates first identification information, the first identification information identifies duration information for P2P communication of at least two stations.

In some embodiments, optional implementations of step 3101 can refer to the optional implementations of step 201 in FIG. 2 and other related parts in the embodiments involved in FIG. 2, which will not be repeated here.

Step 3102, the first radio frame is transmitted.

In some embodiments, optional implementations of step 3102 can refer to the optional implementations of step 202 in FIG. 2 and other related parts in the embodiments involved in FIG. 2, which will not be repeated here.

Step 3103, P2P communication between the stations is triggered by interacting with the station associated with the access point.

In some embodiments, optional implementations of step 3103 can refer to optional implementations of any combination of steps 203 to 207, 208 to 210, and 211 to 213 in FIG. 2, and other related parts in the embodiments involved in FIG. 2, which will not be repeated here.

The low-latency service transmission method involved in the embodiments of this disclosure may include at least one of steps 3101 to 3103. For example, step 3101 can be implemented as a standalone embodiment, steps 3101 and 3102 can be implemented as a standalone embodiment, and steps 3101, 3102 and 3103 can be implemented as a standalone embodiment.

FIG. 3B is a flowchart illustrating a low-latency service transmission method according to an embodiment of this disclosure. As shown in FIG. 3B, embodiments of this disclosure relate to a low-latency service transmission method. Optionally, the above method can be applied to the access point.

As shown in FIG. 3B, the above method includes following steps.

Step 3201, a first radio frame is determined, the first radio frame indicates first identification information, the first identification information identifies duration information for P2P communication of at least two stations.

In some embodiments, optional implementations of step 3201 can refer to the optional implementations of step 201 in FIG. 2 and step 3101 in FIG. 3A, and other related parts in the embodiments involved in FIG. 2 and FIG. 3A, which will not be repeated here.

Step 3202, the first radio frame is transmitted.

In some embodiments, optional implementations of step 3202 can refer to the optional implementations of step 202 in FIG. 2 and step 3102 in FIG. 3A, and other related parts in the embodiments involved in FIGS. 2 and FIG. 3A, which will not be repeated here.

Step 3203, a second radio frame sent by a first station is received, the second radio frame indicates second identification information, the second identification information identifies request information for requesting a second station to perform P2P communication with the first station;
the second radio frame is forwarded to the second station;
a third radio frame sent by the second station is received, the third radio frame indicates third identification information, the third identification information identifies response information to the request information;
the third radio frame is forwarded to the first station.

In some embodiments, optional implementations of step 3203 can refer to the optional implementations of steps 203 to 207 in FIG. 2, step 3103 in FIG. 3A, and other related parts in the embodiments involved in FIG. 2 and FIG. 3A, which will not be repeated here.

The low-latency service transmission method involved in the embodiments of this disclosure may include at least one of steps 3101 to 3103. For example, step 3101 can be implemented as a standalone embodiment, steps 3101 and 3102 can be implemented as a standalone embodiment, and steps 3101, 3102 and 3103 can be implemented as a standalone embodiment.

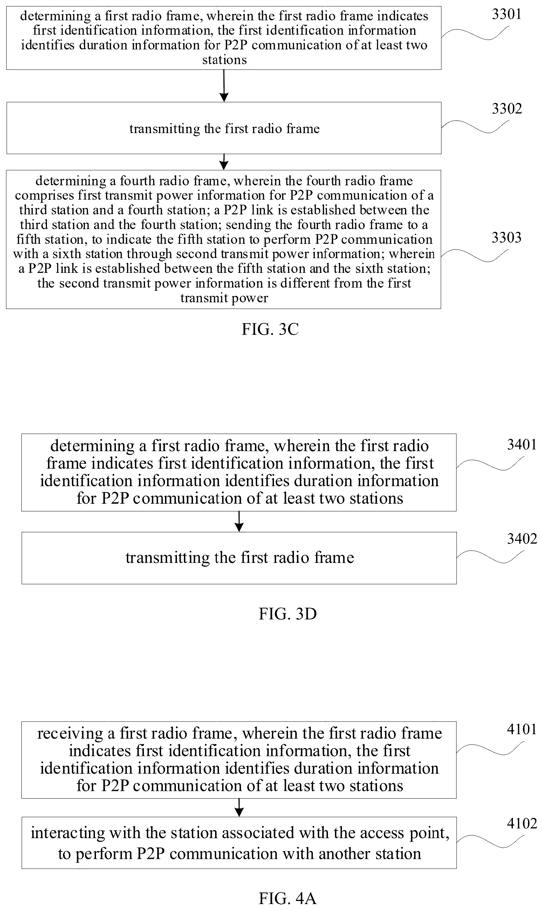

FIG. 3C is a flowchart illustrating a low-latency service transmission method according to an embodiment of this disclosure. As shown in FIG. 3B, embodiments of this disclosure relate to a low-latency service transmission method. Optionally, the above method can be applied to the access point.

As shown in FIG. 3C, the above method includes following steps.

Step 3301, a first radio frame is determined, the first radio frame indicates first identification information, the first identification information identifies duration information for P2P communication of at least two stations.

In some embodiments, optional implementations of step 3301 can refer to the optional implementations of step 201 in FIG. 2, step 3101 in FIG. 3A, step 3201 in FIG. 3B, and other related parts in the embodiments involved in FIG. 2, FIG. 3A and FIG. 3B, which will not be repeated here.

Step 3302, the first radio frame is transmitted.

In some embodiments, optional implementations of step 3302 can refer to the optional implementations of step 202 in FIG. 2, step 3102 in FIG. 3A and step 3202 in FIG. 3B, and other related parts in the embodiments involved in FIG. 2, FIG. 3A and FIG. 3B, which will not be repeated here.

Step 3303, a fourth radio frame is determined, the fourth radio frame includes first transmit power information for P2P communication of a third station and a fourth station; a P2P link is established between the third station and the fourth station;
the fourth radio frame is sent to a fifth station, to indicate the fifth station to perform P2P communication with a sixth station through second transmit power information; a P2P link is established between the fifth station and the sixth station; the second transmit power information is different from the first transmit power.

In some embodiments, optional implementations of step 3303 can refer to optional implementations of steps 208 to 210 in FIG. 2, and other related parts of the embodiments involved in FIG. 2, which will not be repeated here.

The low-latency service transmission method involved in the embodiments of this disclosure may include at least one of steps 3101 to 3103. For example, step 3101 can be implemented as a standalone embodiment, steps 3101 and 3102 can be implemented as a standalone embodiment, and steps 3101, 3102 and 3103 can be implemented as a standalone embodiment.

FIG. 3D is a flowchart illustrating a low-latency service transmission method according to an embodiment of this disclosure. As shown in FIG. 3B, embodiments of this disclosure relate to a low-latency service transmission method. Optionally, the above method can be applied to the access point.

As shown in FIG. 3D, the above method includes following steps.

Step 3401, a first radio frame is determined, the first radio frame indicates first identification information, the first identification information identifies duration information for P2P communication of at least two stations.

In some embodiments, optional implementations of step 3401 can refer to the optional implementations of step 201 in FIG. 2, step 3101 in FIG. 3A, step 3201 in FIG. 3B, step 3301 in FIG. 3C, and other related parts in the embodiments involved in FIG. 2, FIG. 3A, FIG. 3B and FIG. 3C, which will not be repeated here.

Step 3402, the first radio frame is transmitted.

In some embodiments, optional implementations of step 3402 can refer to the optional implementations of step 202 in FIG. 2, step 3102 in FIG. 3A, step 3202 in FIG. 3B, step 3302 in FIG. 3C, and other related parts in the embodiments involved in FIG. 2, FIG. 3A, FIG. 3B and FIG. 3C, which will not be repeated here.

In some embodiments, the seventh station that receives the first radio frame sends the RTS frame to the eighth station that receives the first radio frame, based on the information in the first radio frame; wherein, the seventh station and the eighth station establish a P2P link; the eighth station sends a CTS frame to the seventh station, triggering P2P communication between the seventh and eighth stations. Optional implementations of this embodiment can refer to the optional implementations of steps 211 to 213 in FIG. 2, and other related parts in the embodiments involved in FIG. 2, which will not be repeated here.

The low-latency service transmission method involved in the embodiments of this disclosure may include at least one of steps 3401-3402 and the step of the seventh station and the eighth station engaging in P2P communication described above. For example, step 3401 can be implemented as a standalone embodiment, steps 3401 and 3402 can be implemented as a standalone embodiment, and steps 3401, 3402 and the embodiment of P2P communication between the seventh and eighth stations can be implemented as a standalone embodiment.

FIG. 4A is a flowchart illustrating a low-latency service transmission method according to an embodiment of this disclosure. As shown in FIG. 4A, embodiments of this disclosure relate to a low-latency service transmission method. Optionally, the above method can be applied to a first station.

As shown in FIG. 4A, the method includes following steps.

Step 4101, a first radio frame is received, the first radio frame indicates first identification information, the first identification information identifies duration information for P2P communication of at least two stations.

In some embodiments, optional implementations of step 4101 can refer to the optional implementation of step 202 in FIG. 2 and other related parts in the embodiments involved in FIG. 2, and will not be repeated here.

Step 4102, P2P communication is performed with another station by interacting with the station associated with the access point.

In some embodiments, optional implementations of step 4102 can refer to the optional implementation of any combination of steps 203 to 207, steps 208 to 210, and steps 211 to 213 in FIG. 2, and other related parts in the embodiments involved in FIG. 2, and will not be repeated here.

The low-latency service transmission method involved in the embodiments of this disclosure may include at least one of steps 4101 to 4102. For example, step 4101 can be implemented as a standalone embodiment, and steps 4101 and 4102 can be implemented as a standalone embodiment, but are not limited thereto.

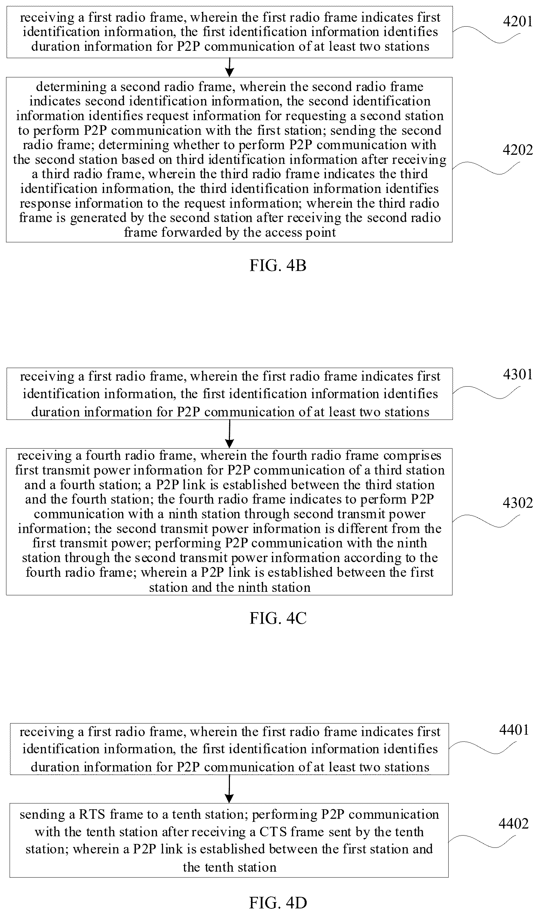

FIG. 4B is a flowchart illustrating a low-latency service transmission method according to an embodiment of this disclosure. As shown in FIG. 4B, embodiments of this disclosure relate to a low-latency service transmission method. Optionally, the above method can be applied to a first station.

As shown in FIG. 4B, the method includes following steps.

Step 4201, a first radio frame is received, the first radio frame indicates first identification information, the first identification information identifies duration information for P2P communication of at least two stations.

In some embodiments, optional implementations of step 4201 can refer to the optional implementation of step 202 in FIG. 2, the optional implementation of step 4101 in FIG. 4A, other related parts in the embodiments involved in FIG. 2 and FIG. 4A, and will not be repeated here.

Step 4202, a second radio frame is determined, the second radio frame indicates second identification information, the second identification information identifies request information for requesting a second station to perform P2P communication with the first station;
the second radio frame is sent;
it is determined whether to perform P2P communication with the second station based on third identification information after receiving a third radio frame, wherein the third radio frame indicates the third identification information, the third identification information identifies response information to the request information;
the third radio frame is generated by the second station after receiving the second radio frame forwarded by the access point.

In some embodiments, optional implementations of step 4202 can refer to the optional implementations of steps 203 to 207 in FIG. 2, and other related parts in the embodiments involved in FIG. 2, which will not be repeated here.

The low-latency service transmission method involved in the embodiments of this disclosure may include at least one of steps 4201 to 4202. For example, step 4201 may be implemented as a standalone embodiment, and steps 4201 and 4202 may be implemented as a standalone embodiment, but are not limited thereto.

FIG. 4C is a flowchart illustrating a low-latency service transmission method according to an embodiment of this disclosure. As shown in FIG. 4C, embodiments of this disclosure relate to a low-latency service transmission method. Optionally, the above method can be applied to a first station.

As shown in FIG. 4C, the method includes following steps.

Step 4301, a first radio frame is received, the first radio frame indicates first identification information, the first identification information identifies duration information for P2P communication of at least two stations.

In some embodiments, optional implementations of step 4301 can refer to the optional implementation of step 202 in FIG. 2, the optional implementation of step 4101 in FIG. 4A, the optional implementation of step 4201 in FIG. 4B, other related parts in the embodiments involved in FIG. 2, FIG. 4A and FIG. 4B, which will not be repeated here.

Step 4302, a fourth radio frame is received, the fourth radio frame includes first transmit power information for P2P communication of a third station and a fourth station; a P2P link is established between the third station and the fourth station; the fourth radio frame indicates to perform P2P communication with a ninth station through second transmit power information; the second transmit power information is different from the first transmit power;

P2P communication is performed with the ninth station through the second transmit power information according to the fourth radio frame; a P2P link is established between the first station and the ninth station.

In some embodiments, optional implementations of step 4302 can refer to the optional implementations of steps 208 to 210 in FIG. 2, and other related parts in the embodiments involved in FIG. 2, which will not be repeated here.

The low-latency service transmission method involved in the embodiments of this disclosure may include at least one of steps 4301 to 4302. For example, step 4301 may be implemented as a standalone embodiment, and steps 4301 and 4302 may be implemented as a standalone embodiment, but are not limited thereto.

FIG. 4D is a flowchart illustrating a low-latency service transmission method according to an embodiment of this disclosure. As shown in FIG. 4D, embodiments of this disclosure relate to a low-latency service transmission method. Optionally, the above method can be applied to a first station.

As shown in FIG. 4D, the method includes following steps.

Step 4401, a first radio frame is received, the first radio frame indicates first identification information, the first identification information identifies duration information for P2P communication of at least two stations.

In some embodiments, optional implementations of step 4401 can refer to the optional implementation of step 202 in FIG. 2, the optional implementation of step 4101 in FIG. 4A, the optional implementation of step 4201 in FIG. 4B, the optional implementation of step 4301 in FIG. 4C, other related parts in the embodiments involved in FIG. 2, FIG. 4A, FIG. 4B and FIG. 4C, which will not be repeated here.

Step 4402,
a RTS frame is sent to a tenth station;
P2P communication is performed with the tenth station after receiving a CTS frame sent by the tenth station; a P2P link is established between the first station and the tenth station.

In some embodiments, optional implementations of step 4402 can refer to optional implementations of any combination of steps 211 to 213 in FIG. 2, and other related parts in the embodiments involved in FIG. 2, which will not be repeated here.

The low-latency service transmission method involved in the embodiments of this disclosure may include at least one of steps 4401 to 4402. For example, step 4401 may be implemented as a standalone embodiment, and steps 4401 and 4402 may be implemented as a standalone embodiment, but is not limited thereto.

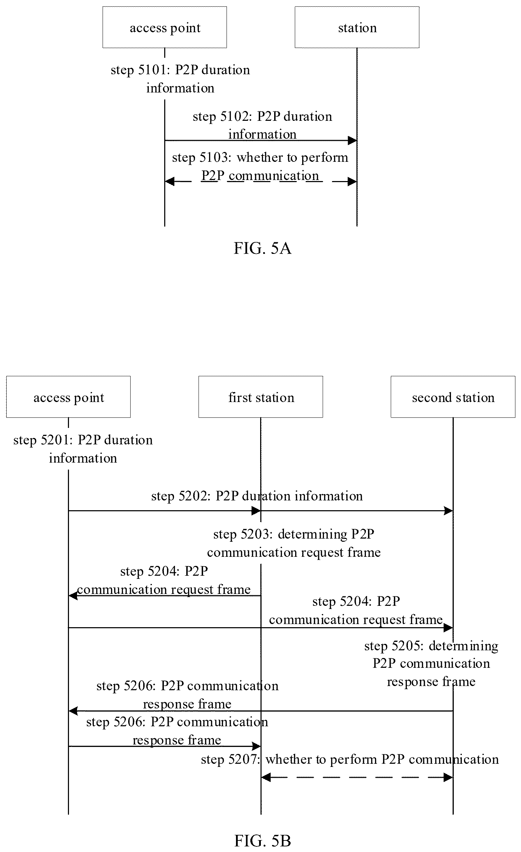

FIG. 5A is an interactive schematic diagram of a low-latency service transmission method according to an embodiment of this disclosure. As shown in FIG. 5A, the embodiments of this disclosure relate to a low-latency service transmission method, which includes following steps.

Step 5101, the access point determines a first radio frame, the first radio frame indicates first identification information, the first identification information identifies duration information for P2P communication of at least two stations.

In some embodiments, optional implementations of step 5101 can refer to the optional implementations of step 201 in FIG. 2, step 3101 in FIG. 3A, step 3201 in FIG. 3B, step 3301 in FIG. 3C, step 3401 in FIG. 3D, and other related parts in the embodiments involved in FIG. 2, FIG. 3A, FIG. 3B, FIG. 3C and FIG. 3D, and will not be repeated here.

Step 5102, the access point sends a first radio frame to the station that has established an initial association with the access point.

Optional implementations of step 5102 can refer to the optional implementations of step 202 in FIG. 2, step 3102 in FIG. 3A, and other related parts in the embodiments involved in FIG. 2 and FIG. 3A, and will not be repeated here.

Step 5103, the access point interacts with the station that received the first radio frame, to determine whether P2P communication may be performed between the stations.

In some embodiments, optional implementations of step 5103 can refer to optional implementations of any combination of steps 203 to 207, steps 208 to 210, and steps 211 to 213 in FIG. 2, and other related parts in the embodiments involved in FIG. 2, which will not be repeated here.

The low-latency service transmission method involved in the embodiments of this disclosure may include at least one of steps 5101 to 5103. For example, step 5101 may be implemented as a standalone embodiment, steps 5101 and 5102 may be implemented as a standalone embodiment, and steps 5101, 5102 and 5103 may be implemented as a standalone embodiment.

FIG. 5B is an interactive schematic diagram of a low-latency service transmission method according to an embodiment of this disclosure. As shown in FIG. 5B, the embodiments of this disclosure relate to a low-latency service transmission method, which includes following steps.

Step 5201, the access point determines a first radio frame, the first radio frame indicates first identification information, the first identification information identifies duration information for P2P communication of at least two stations.

In some embodiments, optional implementations of step 5201 can refer to the optional implementations of step 201 in FIG. 2, step 3101 in FIG. 3A, step 3201 in FIG. 3B, step 3301 in FIG. 3C, step 3401 in FIG. 3D, and other related parts in the embodiments involved in FIG. 2, FIG. 3A, FIG. 3B, FIG. 3C and FIG. 3D, and will not be repeated here.

Step 5202, the access point sends the first radio frame to the first station and the second station with which it has established an initial association.

Optional implementations of step 5202 can refer to the optional implementations of step 202 in FIG. 2, step 3102 in FIG. 3A, step 3202 in FIG. 3B, step 3302 in FIG. 3C, step 3402 in FIG. 3D, and other related parts in the embodiments involved in FIG. 2, FIG. 3A, FIG. 3B, FIG. 3C and FIG. 3D, and will not be repeated here.

Step 5203, the first station determines a second radio frame, the second radio frame indicates second identification information, the second identification information identifies request information for requesting a second station to perform P2P communication with the first station.

Optional implementations of step 5203 can refer to the optional implementations of step 203 in FIG. 2, step 3103 in FIG. 3A, step 3203 in FIG. 3B, and other related parts in the embodiments involved in FIG. 2, FIG. 3A and FIG. 3B, and will not be repeated here.

Step 5204, the access point receives the second radio frame and forwards the second radio frame to the second station.

Optional implementations of step 5203 can refer to the optional implementations of step 204 in FIG. 2, step 3103 in FIG. 3A, step 3203 in FIG. 3B, and other related parts in the embodiments involved in FIG. 2, FIG. 3A and FIG. 3B, and will not be repeated here.

Step 5205, the second station determines a third radio frame, the third radio frame indicates the third identification information, the third identification information identifies response information to the request information.

Optional implementations of step 5205 can refer to the optional implementations of step 205 in FIG. 2, step 3103 in FIG. 3A, step 3203 in FIG. 3B, and other related parts in the embodiments involved in FIG. 2, FIG. 3A and FIG. 3B, and will not be repeated here.

Step 5206, the access point receives the third radio frame and forwards the third radio frame to the first station.

Optional implementations of step 5206 can refer to the optional implementations of step 206 in FIG. 2, step 3103 in FIG. 3A, step 3203 in FIG. 3B, and other related parts in the embodiments involved in FIG. 2, FIG. 3A and FIG. 3B, and will not be repeated here.

Step 5207, the first station determines whether to perform P2P communication with the second station based on the third identification information.

Optional implementations of step 5207 can refer to the optional implementations of step 207 in FIG. 2, step 3103 in FIG. 3A, step 3203 in FIG. 3B, and other related parts in the embodiments involved in FIG. 2, FIG. 3A and FIG. 3B, and will not be repeated here.

The low-latency service transmission method involved in the embodiments of this disclosure may include at least one of steps 5201 to 5207. For example, step 5201 can be implemented as a standalone embodiment, steps 5201 and 5202 can be implemented as a standalone embodiment, and steps 5201 to 5207 can be implemented as a standalone embodiment, but are not limited thereto.

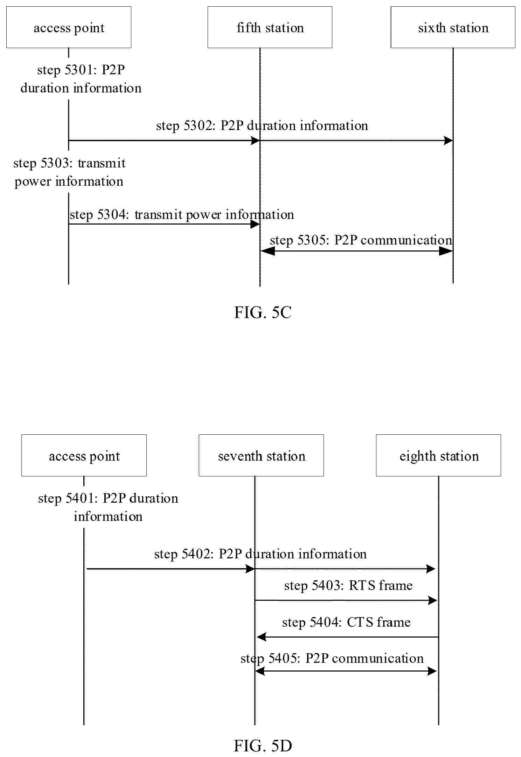

FIG. 5C is an interactive schematic diagram of a low-latency service transmission method according to an embodiment of this disclosure. As shown in FIG. 5C, the embodiments of this disclosure relate to a low-latency service transmission method, which includes following steps.

Step 5301, the access point determines a first radio frame, the first radio frame indicates first identification information, the first identification information identifies duration information for P2P communication of at least two stations.

In some embodiments, optional implementations of step 5301 can refer to the optional implementations of step 201 in FIG. 2, step 3101 in FIG. 3A, step 3201 in FIG. 3B, step 3301 in FIG. 3C, step 3401 in FIG. 3D, step 5101 in FIG. 5A, and other related parts in the embodiments involved in FIG. 2, FIG. 3A, FIG. 3B, FIG. 3C, FIG. 3D and FIG. 5A, and will not be repeated here.

Step 5302, the access point sends a first radio frame to the third station, the fourth station, the fifth station and the sixth station with which it has established an initial association.

In some embodiments, optional implementations of step 5302 can refer to the optional implementations of step 202 in FIG. 2, step 3102 in FIG. 3A, step 3202 in FIG. 3B, step 3302 in FIG. 3C, step 3402 in FIG. 3D, step 5102 in FIG. 5A, and other related parts in the embodiments involved in FIG. 2, FIG. 3A, FIG. 3B, FIG. 3C, FIG. 3D and FIG. 5A, and will not be repeated here.

Step 5303, the access point determines a fourth radio frame, the fourth radio frame includes first transmit power information for P2P communication of a third station and a fourth station; a P2P link is established between the third station and the fourth station.

Optional implementations of step 5303 can refer to the optional implementations of step 208 in FIG. 2, step 3103 in FIG. 3A, step 3203 in FIG. 3C, and other related parts in the embodiments involved in FIG. 2, FIG. 3A and FIG. 3C, and will not be repeated here.

Step 5304, the access point sends a fourth radio frame to the fifth station, to indicate the fifth station to perform P2P communication with the sixth station through a second transmit power; a P2P link is established between the fifth station and the sixth station; the second transmit power is different from the first transmit power and the third transmit power.

Optional implementations of step 5304 can refer to the optional implementations of step 209 in FIG. 2, step 3103 in FIG. 3A, step 3203 in FIG. 3C, and other related parts in the embodiments involved in FIG. 2, FIG. 3A and FIG. 3C, and will not be repeated here.

Step 5305, the fifth station and the sixth station perform P2P communication.

Optional implementations of step 5305 can refer to the optional implementations of step 210 in FIG. 2, step 3103 in FIG. 3A, step 3203 in FIG. 3C, and other related parts in the embodiments involved in FIG. 2, FIG. 3A and FIG. 3C, and will not be repeated here.

The low-latency service transmission method involved in embodiments of this disclosure can include at least one of steps 5301 to 5305. For example, step 5301 can be implemented as a standalone embodiment, steps 5301 and 5302 can be implemented as a standalone embodiment, and steps 5301 to 5305 can be implemented as a standalone embodiment, but are not limited thereto.

FIG. 5D is an interactive schematic diagram of a low-latency service transmission method according to an embodiment of this disclosure. As shown in FIG. 5D, the embodiments of this disclosure relate to a low-latency service transmission method, which includes following steps.

Step 5401, the access point determines a first radio frame, the first radio frame indicates first identification information, the first identification information identifies duration information for P2P communication of at least two stations.

In some embodiments, optional implementations of step 5401 can refer to the optional implementations of step 201 in FIG. 2, step 3101 in FIG. 3A, step 3201 in FIG. 3B, step 3301 in FIG. 3C, step 3401 in FIG. 3D, step 5101 in FIG. 5A, step 5201 in FIG. 5B, and other related parts in the embodiments involved in FIG. 2, FIG. 3A, FIG. 3B, FIG. 3C, FIG. 3D, FIG. 5A and FIG. 5B, and will not be repeated here.

Step 5402, the access point sends a first radio frame to the seventh station and the eighth station with which it has established an initial association.

In some embodiments, optional implementations of step 5402 can refer to the optional implementations of step 202 in FIG. 2, step 3102 in FIG. 3A, step 3202 in FIG. 3B, step 3302 in FIG. 3C, step 3402 in FIG. 3D, step 5102 in FIG. 5A, step 5202 in FIG. 5B, and other related parts in the embodiments involved in FIG. 2, FIG. 3A, FIG. 3B, FIG. 3C, FIG. 3D, FIG. 5A and FIG. 5B, and will not be repeated here.

Step 5403, the seventh station sends a Request to Transmit RTS frame to the eighth station; wherein, the seventh and eighth stations have established a P2P link.

Optional implementations of step 5403 can refer to the optional implementations of step 211 in FIG. 2, step 3103 in FIG. 3A, step 3203 in FIG. 3C, and other related parts in the embodiments involved in FIG. 2, FIG. 3A and FIG. 3C, and will not be repeated here.

Step 5404, the eighth station sends a Clear to Send CTS frame to the seventh station, triggering P2P communication between the seventh and eighth stations.

Optional implementations of step 5404 can refer to the optional implementations of step 212 in FIG. 2, step 3103 in FIG. 3A, step 3203 in FIG. 3C, and other related parts in the embodiments involved in FIG. 2, FIG. 3A and FIG. 3C, and will not be repeated here.

Step 5405, the seventh and eighth stations perform P2P communication.

Optional implementations of step 5405 can refer to the optional implementations of step 213 in FIG. 2, step 3103 in FIG. 3A, step 3203 in FIG. 3C, and other related parts in the embodiments involved in FIG. 2, FIG. 3A and FIG. 3C, and will not be repeated here.

The low-latency service transmission method involved in embodiments of this disclosure can include at least one of steps 5401 to 5405. For example, step 5401 can be implemented as a standalone embodiment, steps 5401 and 5402 can be implemented as a standalone embodiment, and steps 5401 to 5405 can be implemented as a standalone embodiment, but are not limited thereto.

This disclosure also proposes an apparatus for implementing any of the above low-latency service transmission methods. For example, a low-latency service transmission apparatus is proposed, which includes units or modules for implementing the steps performed by the access point in any of the above methods. For example, another low-latency service transmission apparatus is proposed, including units or modules for implementing the steps performed by the station in any of the above methods.

It should be understood that the division of units or modules in the above apparatus is only a logical functional division; in actual implementation, they can be fully or partially integrated into a single physical entity, or they can be physically separated. Furthermore, the units or modules in the apparatus can be implemented in the form of a processor invoking software: for example, the apparatus includes a processor connected to a memory containing instructions, and the processor invokes the instructions stored in the memory to implement any of the above methods or to implement the functions of the units or modules of the apparatus. The processor is, for example, a general-purpose processor, such as a Central Processing Unit (CPU) or a microprocessor, and the memory is either internal or external to the apparatus. Alternatively, the units or modules in the apparatus can be implemented in the form of hardware circuits. The functions of some or all of the units or modules can be implemented through the design of the hardware circuits, which can be understood as one or more processors. For example, in one implementation, the hardware circuit is an application-specific integrated circuit (ASIC), and the functions of some or all of the units or modules are implemented through the design of the logical relationships between the components within the circuit. For example, in another implementation, the hardware circuit can be implemented using a programmable logic device (PLD), such as a Field Programmable Gate Array (FPGA), which can include a large number of logic gates. The connection relationships between the logic gates are configured through a configuration file, thereby implementing the functions of some or all of the units or modules. All units or modules of the above-mentioned apparatuses can be implemented entirely by a processor invoking software, or entirely through hardware circuits, or partially by a processor invoking software and the remaining through hardware circuits.

In embodiments of this disclosure, the processor is a circuit with signal processing capabilities. In one implementation, the processor can be a circuit with instruction reading and execution capabilities, such as a Central Processing Unit (CPU), a microprocessor, a graphics processing unit (GPU) which can be understood as a microprocessor, or a digital signal processor (DSP). In another implementation, the processor can implement certain functions through the logical relationships of hardware circuits. The logical relationships of the hardware circuits are fixed or reconfigurable. For example, the processor may be a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the process of the processor loading instructions to implement the functions of some or all of the above units or modules. Furthermore, it can also be a hardware circuit designed for artificial intelligence, which can be understood as an ASIC, such as a Neural Network Processing Unit (NPU), a Tensor Processing Unit (TPU), or a Deep Learning Processing Unit (DPU).

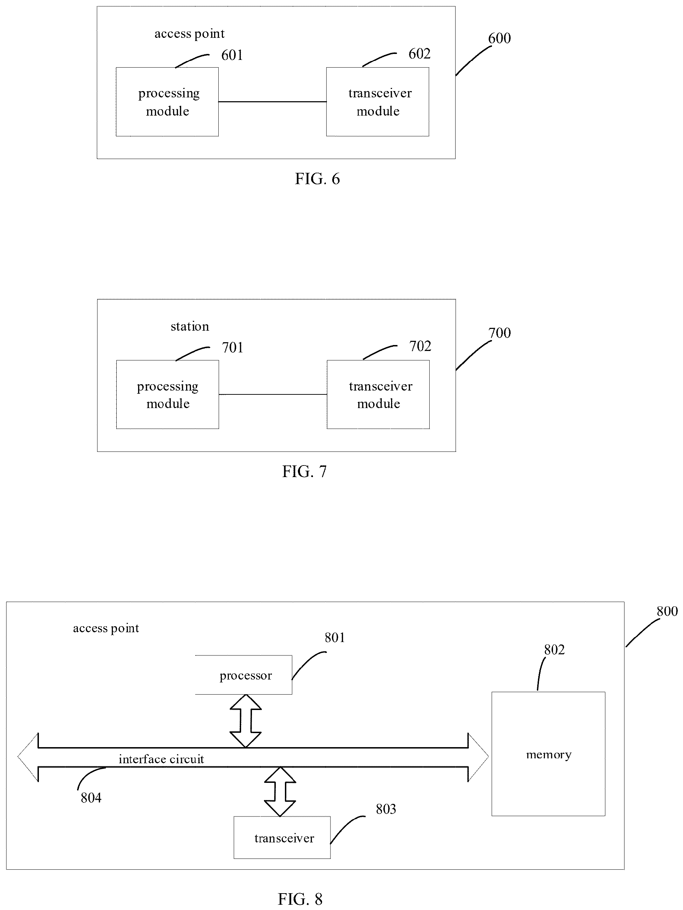

FIG. 6 is a schematic diagram of the structure of an access point according to an embodiment of this disclosure. As shown in FIG. 6, the access point 600 may include at least one of a processing module 601 and a transceiver module 602.

In some embodiments, the processing module 601 is used to determine a first radio frame, wherein the first radio frame indicates first identification information, the first identification information identifies duration information for P2P communication of at least two stations.

Optionally, the transceiver module 602 is used to execute at least one of the communication steps, such as sending and/or receiving, performed by the access point 101 in any of the above methods, for example, steps 202, 204, 206, 209, 3102, 3103, 3203, 3203, 3303, 3303, 3403, 3403, 4101, 4102, 4201, 4202, 4301, 4302, 4401, 4402, 5101, 5102, 5103, 5201, 5202, 5204, 5206, 5301, 5302, 5304, 5401, 5402, but not limited to, which will not be elaborated here.

Optionally, the processing module described above is used to execute at least one of the other steps performed by the access point 101 in any of the above methods, e.g., steps 201, 208, 3101, 3103, 3201, 3203, 3301, 3303, 3401, 3403, 4102, 4202, but not limited thereto, which will not be elaborated here.

FIG. 7 is a schematic diagram of the structure of a station according to an embodiment of this disclosure. As shown in FIG. 7, the station 700 may include at least one of a processing module 701 and a transceiver module 702, etc.

In some embodiments, the processing module 701 is used to determine a second radio frame, the second radio frame indicates second identification information, the second identification information identifies request information for requesting a second station to perform P2P communication with the first station.

Optionally, the transceiver module 702 is used to perform at least one of the communication steps, such as sending and/or receiving, performed by the multi-connection station 102 in any of the above methods, for example, steps 202, 204, 206, 209, 3102, 3103, 3203, 3203, 3303, 3303, 3403, 3403, 4101, 4102, 4201, 4202, 4301, 4302, 4401, 4402, 5101, 5102, 5103, 5201, 5202, 5204, 5206, 5301, 5302, 5304, 5401, 5402, but not limited thereto, which will not be elaborated here.

Optionally, the processing module described above is used to perform at least one of the other steps performed by the station 102 in any of the above methods, e.g., steps 203, 205, 207, 210, 211, 212, 213, 3103, 3203, 3303, 3403, 4102, 4202, 4302, 4402, 5103, 5203, 5205, 5207, 5305, 5403, 5404, 5405, but not limited thereto, which will not be elaborated here.

In some embodiments, the transceiver module may include a transmitting module and/or a receiving module, which may be separate or integrated. Optionally, the transceiver module may be interchangeable with a transceiver.

In some embodiments, the processing module may be a single module or may include multiple sub-modules. Optionally, the multiple sub-modules may each execute all or part of the steps required by the processing module. Optionally, the processing module may be interchangeable with a processor.

FIG. 8 is a schematic structural diagram of an access point 800 proposed in an embodiment of this disclosure. The access point 800 may be a network device (e.g., an access network device, a core network device, etc.), a terminal (e.g., user equipment, etc.), a chip, chip system, or processor that supports the network device to implement any of the above methods, or a chip, chip system, or processor that supports the terminal to implement any of the above methods. The access point 800 can be used to implement the methods described in the above method embodiments, and specific details can be found in the descriptions of the above method embodiments.

As shown in FIG. 8, the access point 800 includes one or more processors 801. The processor 801 can be a general-purpose processor or a dedicated processor, such as a baseband processor or a central processing unit. The baseband processor can be used to process communication protocols and communication data, and the central processing unit can be used to control communication apparatuses (e.g., base stations, baseband chips, terminal devices, terminal device chips, DUs or CUs, etc.), execute programs, and process program data. The access point 800 is used to execute any of the above methods.

In some embodiments, the access point 800 further includes one or more memories 802 for storing instructions. Optionally, all or part of the memories 802 may be located outside the access point 800.

In some embodiments, the access point 800 further includes one or more transceivers 803. When the multi-connection access point 800 includes one or more transceivers 803, the transceiver 803 performs at least one of communication steps such as sending and/or receiving in the above method, e.g., steps 202, 204, 206, 209, 3102, 3103, 3203, 3203, 3303, 3303, 3403, 3403, 4101, 4102, 4201, 4202, 4301, 4302, 4401, 4402, 5101, 5102, 5103, 5201, 5202, 5204, 5206, 5301, 5302, 5304, 5401, and 5402, but not limited thereto, and the processor 801 executes at least one of other steps, e.g., steps 201, 208, 3101, 3103, 3201, 3203, 3301, 3303, 3401, 3403, 4102, and 4202, but not limited thereto.

In some embodiments, a transceiver may include a receiver and/or a transmitter, which may be separate or integrated. Optionally, the terms transceiver, transceiver unit, transceiver machine, and transceiver circuit can be used interchangeably; the terms transmitter, transmitting unit, transmitter machine, and transmitting circuit can be used interchangeably; and the terms receiver, receiving unit, receiver machine, and receiving circuit can be used interchangeably.

In some embodiments, the access point 800 may include one or more interface circuits 804. Optionally, the interface circuit 804 is connected to the memory 802 and can be used to receive signals from the memory 802 or other apparatuses, and to send signals to the memory 802 or other apparatuses. For example, the interface circuit 804 can read instructions stored in the memory 802 and send the instructions to the processor 801.

The access point 800 described in the above embodiments may be a network device or a terminal, but the scope of the multi-connection access point 800 described in this disclosure is not limited thereto, and the structure of the access point 800 may not be limited to FIG. 8. The communication device may be a standalone device or may be part of a large device. For example, the communication device may be: (1) a standalone integrated circuit (IC), or a chip, or a chip system or a subsystem; (2) a collection of one or more ICs, optionally including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

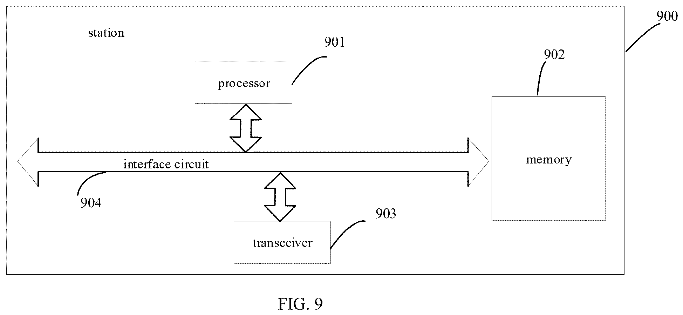

FIG. 9 is a schematic structural diagram of a station 900 proposed in an embodiment of this disclosure. The station 900 may be a network device (e.g., an access network device, a core network device, etc.), a terminal (e.g., user equipment, etc.), a chip, chip system, or processor that supports the network device to implement any of the above methods, or a chip, chip system, or processor that supports the terminal to implement any of the above methods. The station 900 can be used to implement the methods described in the above method embodiments, and specific details can be found in the descriptions of the above method embodiments.

As shown in FIG. 9, the station 900 includes one or more processors 901. The processor 901 can be a general-purpose processor or a dedicated processor, such as a baseband processor or a central processing unit. The baseband processor can be used to process communication protocols and communication data, and the central processing unit can be used to control communication apparatuses (e.g., base stations, baseband chips, terminal devices, terminal device chips, DUs or CUs, etc.), execute programs, and process program data. The station 900 is used to execute any of the above methods.

In some embodiments, the station 900 further includes one or more memories 902 for storing instructions. Optionally, all or part of the memories 902 may be located outside the station 900.

In some embodiments, the station 900 further includes one or more transceivers 903. When the station 900 includes one or more transceivers 903, the transceiver 903 performs at least one of communication steps such as sending and/or receiving in the above method, e.g., steps 202, 204, 206, 209, 3102, 3103, 3203, 3203, 3303, 3303, 3403, 3403, 4101, 4102, 4201, 4202, 4301, 4302, 4401, 4402, 5101, 5102, 5103, 5201, 5202, 5204, 5206, 5301, 5302, 5304, 5401, and 5402, but not limited thereto, and the processor 901 executes at least one of other steps, e.g., steps 203, 205, 207, 210, 211, 212, 213, 3103, 3203, 3303, 3403, 4102, 4202, 4302, 4402, 5103, 5203, 5205, 5207, 5305, 5403, 5404, and 5405, but not limited thereto.

In some embodiments, a transceiver may include a receiver and/or a transmitter, which may be separate or integrated. Optionally, the terms transceiver, transceiver unit, transceiver machine, and transceiver circuit can be used interchangeably; the terms transmitter, transmitting unit, transmitter machine, and transmitting circuit can be used interchangeably; and the terms receiver, receiving unit, receiver machine, and receiving circuit can be used interchangeably.

In some embodiments, the station 900 may include one or more interface circuits 904. Optionally, the interface circuit 904 is connected to the memory 902 and can be used to receive signals from the memory 902 or other apparatuses, and to send signals to the memory 902 or other apparatuses. For example, the interface circuit 904 can read instructions stored in the memory 902 and send the instructions to the processor 901.

The multi-connection station 900 described in the above embodiments may be a network device or a terminal, but the scope of the multi-connection station 900 described in this disclosure is not limited thereto, and the structure of the station 900 may not be limited to FIG. 9. The communication device may be a standalone device or may be part of a large device. For example, the communication device may be: (1) a standalone integrated circuit (IC), or a chip, or a chip system or a subsystem; (2) a collection of one or more ICs, optionally including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

This disclosure also provides a storage medium storing instructions that, when executed on an access point 800, cause the access point 800 to perform any of the above methods. When executed by the station 900, the instructions cause the station 900 to perform any of the above methods. Optionally, the storage medium is an electronic storage medium. Optionally, the storage medium is a computer-readable storage medium, but not limited thereto; it may also be a storage medium readable by other apparatuses. Optionally, the storage medium may be a non-transitory storage medium, but not limited thereto; it may also be a temporary storage medium.

This disclosure also provides a program product that, when executed by the access point 800, causes the access point 800 to perform any of the above methods. When executed by the station 900, the program product causes the station 900 to perform any of the above methods. Optionally, the program product is a computer program product.

This disclosure also provides a computer program that, when executed on a computer, causes the computer to perform any of the above methods.

## Claims

1. A low-latency service transmission method, applied to an access point, the method comprising:
determining a first radio frame, wherein the first radio frame indicates first identification information, the first identification information identifies duration information for peer-to-peer P2P communication of at least two stations; and
transmitting the first radio frame.

2. The method according to claim 1, wherein the duration information comprises at least two of communication duration, start time, and end time of P2P communication for the stations.

3. The method according to claim 1 or 2, wherein the first radio frame carries a Restricted Target Wake Time R-TWT information element;
the R-TWT information element comprises an R-TWT Traffic Info field;
the R-TWT Traffic Info field comprises a Traffic Info Control subfield;
the Traffic Info Control subfield comprises P2P communication information.

4. The method according to claim 3, wherein the P2P communication information comprises:
traffic identifier TID information;
or TID information and link bitmap information;
the link bitmap information is set to a first parameter value, indicating that P2P communication is performed over a link corresponding to the TID information.

5. The method according to claim 4, wherein the R-TWT information element further comprises aligned information;
the aligned information is set to a second parameter value, indicating that P2P communication is performed over an established P2P link.

6. The method according to claim 5, wherein time for communication of the access point and the station does not overlap with time corresponding to the duration information.

7. The method according to claim 1, further comprising:
receiving a second radio frame sent by a first station, wherein the second radio frame indicates second identification information, the second identification information identifies request information for requesting a second station to perform P2P communication with the first station;
forwarding the second radio frame to the second station;
receiving a third radio frame sent by the second station, wherein the third radio frame indicates third identification information, the third identification information identifies response information to the request information; and
forwarding the third radio frame to the first station.

8. The method according to claim 1, further comprising:
determining a fourth radio frame, wherein the fourth radio frame comprises first transmit power information for P2P communication of a third station and a fourth station; a P2P link is established between the third station and the fourth station; and
sending the fourth radio frame to a fifth station, to indicate the fifth station to perform P2P communication with a sixth station through second transmit power information; wherein a P2P link is established between the fifth station and the sixth station; the second transmit power information is different from the first transmit power.

9. The method according to claim 1, wherein a seventh station sends a Request to Send RTS frame to an eighth station; and performs P2P communication with the eighth station after receiving a Clear to Send CTS frame sent from the eighth station; wherein a P2P link is established between the seventh station and the eighth station.

10. The method according to claim 1, wherein the first radio frame comprises at least one of a beacon frame, a probe response frame, or an unsolicited probe response frame.

11. A low-latency service transmission method, applied to a first station, the method comprising:
receiving a first radio frame, wherein the first radio frame indicates first identification information, the first identification information identifies duration information for peer-to-peer P2P communication of at least two stations, the first station is comprised in the at least two stations.

12. The method according to claim 11, wherein the duration information comprises at least two of communication duration, start time, and end time of P2P communication for the stations.

13. The method according to claim 11 or 12, wherein the first radio frame carries a Restricted Target Wake Time R-TWT information element;
the R-TWT information element comprises an R-TWT Traffic Info field;
the R-TWT Traffic Info field comprises a Traffic Info Control subfield;
the Traffic Info Control subfield comprises P2P communication information.

14. The method according to claim 13, wherein the P2P communication information comprises:
TID information; or
TID information and link bitmap information; and
the link bitmap information is set to a first parameter value, indicating that P2P communication is performed over a link corresponding to the TID information.

15. The method according to claim 14, wherein the R-TWT information element further comprises aligned information; and
the aligned information is set to a second parameter value, indicating that P2P communication is performed over an established P2P link.

16. The method according to claim 15, wherein time for communication of an access point sending the first radio frame and the first station does not overlap with time corresponding to the duration information.

17. The method according to claim 16, further comprising:
determining a second radio frame, wherein the second radio frame indicates second identification information, the second identification information identifies request information for requesting a second station to perform P2P communication with the first station;
sending the second radio frame; and
determining whether to perform P2P communication with the second station based on third identification information after receiving a third radio frame, wherein the third radio frame indicates the third identification information, the third identification information identifies response information to the request information;
wherein the third radio frame is generated by the second station after receiving the second radio frame forwarded by the access point.

18. The method according to claim 11, further comprising:
receiving a fourth radio frame, wherein the fourth radio frame comprises first transmit power information for P2P communication of a third station and a fourth station; a P2P link is established between the third station and the fourth station; the fourth radio frame indicates to perform P2P communication with a ninth station through second transmit power information; the second transmit power information is different from the first transmit power; and
performing P2P communication with the ninth station through the second transmit power information according to the fourth radio frame; wherein a P2P link is established between the first station and the ninth station.

19. The method according to claim 11, further comprising:
sending a RTS frame to a tenth station; and
performing P2P communication with the tenth station after receiving a CTS frame sent by the tenth station; wherein a P2P link is established between the first station and the tenth station.

20. The method according to claim 11, wherein the first radio frame comprises at least one of a beacon frame, a probe response frame, or an unsolicited probe response frame.

21. An access point, comprising:
a radio frame determination module, configured to determine a first radio frame, wherein the first radio frame indicates first identification information, the first identification information identifies duration information for peer-to-peer P2P communication of at least two stations; and
a radio frame transmission module, configured to transmit the first radio frame.

22. A station, comprising:
a radio frame receiving module, configured to receive a first radio frame, wherein the first radio frame indicates first identification information, the first identification information identifies duration information for peer-to-peer P2P communication of at least two reference stations, the station is comprised in the at least two reference stations.

23. An access point, comprising:
one or more processors;
wherein, the access point is configured to execute the low-latency service transmission method according to any one of claims 1 to 10.

24. A station, comprising:
one or more processors;
wherein, the station is configured to execute the low-latency service transmission method according to any one of claims 11 to 20.

25. A communication system, comprising an access point and a station; wherein the access point is configured to implement the low-latency service transmission method according to any one of claims 1 to 10, and the station is configured to implement the low-latency service transmission method according to any one of claims 11 to 20.

26. A storage medium storing instructions, wherein when the instructions are executed on a communication device, the communication device executes the low-latency service transmission method according to any one of claims 1 to 10, or executes the low-latency service transmission method according to any one of claims 11 to 20.
